# EUROPEAN PATENT SPECIFICATION

(11) **EP 1 387 733 B1**
(45) Date of publication and mention of the grant of the patent: **04.03.2009**
(21) Application number: 02771796.6
(22) Date of filing: 15.01.2002
(51) Int. Cl.: B23K 9/133

(54) **A DEVICE IN THE FEEDING OF WELDING WIRE**
VORRICHTUNG ZUR ZUFÜHRUNG VON SCHWEISSDRAHT
DISPOSITIF D'AVANCE DU FIL DE SOUDURE

(30) Priority: 18.05.2001 SE 0101749
(43) Date of publication of application: 11.02.2004
(73) Proprietor: Esab AB, 402 77 Göteborg (SE)
(72) Inventor: JENSEN, Bernt-Inge, B., S-442 32 Kungälv (SE)
(74) Representative: Vink, Charlotta
(86) International application number: PCT/SE2002/000055
(87) International publication number: WO 2002/094493

(56) References cited:
- DD-A3- 276 399
- US-A- 3 249 276

## Description

### Technical Field of Invention

The present invention relates to a device and a method for the feeding of welding wire, said device and method designed to prevent deformities from forming in the welding wire.

### Technical Background of the Invention

It is most important that welding operations can be performed without interruptions, particularly when structural parts requiring extremely high-quality welding joints are to be welded together. Feeding the wire in a continuous manner avoids time-consuming and complex wire exchanges, which require feed-in of a fresh wire through the wire guide to the welding machine. Interruptions of the feed-in of a fresh wire into the wire guide cause considerable problems, particularly when several welding machines work together.

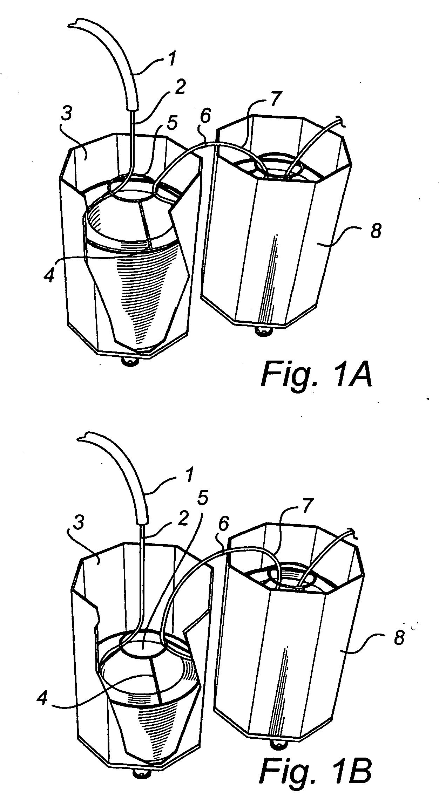

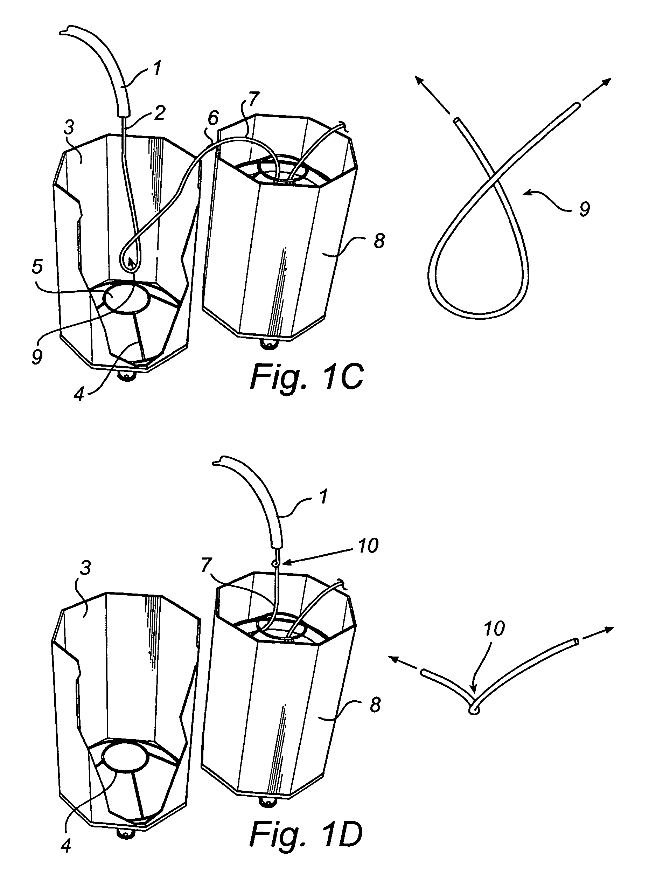

In the course of the welding process, the wire is fed from the container to the welding machine via a wire guide, the container being emptied gradually. This sequence is illustrated in Figs 1A and 1B in conjunction with the uninterrupted changeover from a first container holding welding wire to a second container holding welding wire. When the supply of wire inside the first container runs out, the wire feed continues without interruptions in that the withdrawal of wire is transferred automatically to the second container. A problem may arise, however, as the end part of the welding wire in the first container is being withdrawn therefrom. A problem of this nature may also arise already during the withdrawal of wire from the first container, as a loop may then form, which is gradually tightened as the wire feed progresses. If it comes to the worst, a knot-like deformity develops in the welding wire, referred to in the following as a "kink". Figs 1C and 1D very schematically show examples of such development. Deformities of this kind hamper the wire feed and cause interruptions of the welding process. Also sharp bending of the welding wire involves risks of undesired welding interruptions, since the welding wire may obstruct the wire-guide or the welding-machine operation.

Under unhappy circumstances, sharp bends or "kinks" in the welding wire may arise as the wire is being withdrawn from a container holding welding wire. Such "kinks" or similar deformations could arise, for instance when the welding wire, in wound condition inside the container, leaves the reel in an uncontrolled manner. Should this happen, the welding-wire feed is obstructed and the welding process is interrupted.

### Summary of the Invention

The object of the present invention is to counteract by means of a simple device the formation of "kinks" in and sharp bending of the welding wire as may arise when the wire is being paid out in conjunction with welding operations, particularly in connection with the automatic changeover of the welding-wire withdrawal from a first container holding welding wire to a second container holding welding wire.

This object is achieved by means of a device of the kind defined in the introduction, which is characterised in that a wire-orientation runner is arranged on the leading end part, as seen in the direction of wire feed, of the welding wire placed inside the container, said runner arranged to advance, during wire feed, along the welding wire as the wire feed progresses.

Preferably, the runner is a solid body and it is formed with a welding-wire passage. The forward end part of the runner, as seen in the direction of wire feed, is configured so as to form a slide-off surface for the welding wire.

In a preferred embodiment, the runner is essentially pear-shaped and the welding-wire passage extends in the lengthwise direction of the runner. The inlet to the welding-wire passage essentially is a circular aperture.

One object of the present invention likewise is to suggest a method for withdrawal of wire from a container holding welding wire in conjunction with wire feed through a wire guide to a welding machine, preferably in conjunction with uninterrupted changeover from a first container holding welding wire to a second container holding welding wire.

This method is characterised by the steps (without limitation as to the mutual order) of connecting via a wire guide, a first end of a welding wire in a first container holding welding wire to the wire feed mechanism of a welding machine, and arranging a wire-orientation runner on the leading end part, as seen in the direction of wire feed, of the welding wire placed inside the first container.

In the case of feeding welding wire with uninterrupted changeover of the withdrawal of welding wire from a first container holding welding wire to a second container holding welding wire the runner is made to automatically accompany the welding wire from the first to the second container holding welding wire, when the welding wire inside the first container holding welding wire is used up.

Additional characteristics and advantages of the invention will become apparent from the following description and accompanying claims.

### Brief Description of the Drawings

The invention will be described in more detail in the following with reference to the accompanying drawings, wherein
Figs 1A-D illustrate a prior-art wire feed sequence.
Fig 2 is a schematic representation of the device in accordance with the invention.
Figs 3A-B illustrate a wire feed sequence in accordance with the present invention.
Fig 4 is a cross-sectional view of a wire-orientation runner in accordance with the invention.
Figs 5A-D are views showing a sequence according to which the wire-orientation runner of Fig 4 prevents deformities from forming in the welding wire.

### Detailed Description of Preferred Embodiments

Fig 1 shows a conventional wire-feed sequence in welding operations using an endless welding wire. A first end of a welding wire 2 is fed to a wire guide 1. The welding wire 2 is stored in a suitable manner in wound condition and packaged inside a container 3. A holding-down means 4 is placed on top of the reel of wound welding wire in order to keep the welding wire 2 in place inside the container 3. The welding wire 2 is withdrawn from the container 3 through an opening 5 formed in the holding-down means 4. Preferably by means of a welding joint 6, the trailing end of the welding wire 2 is joined to the exiting leading end of a second welding wire 7. The welding wire 7 preferably is wound and packaged inside a second container 8 in an identical manner to welding wire 2. As the welding process progresses, the welding wire 2 is fed through the wire guide 1, and the amount of welding wire inside the container 3 is reduced gradually (fig 1B). The sequence of steps occurring when the trailing part of the welding wire 2 in which a loop 9 has formed is to be withdrawn from the container 3, is shown in Fig 1C. As the welding-wire feed progresses, the loop 9 is tightened more and more. As a result, the welding wire 2 may bend sharply, which in the most serious case may lead to the formation of a "kink" 10, as shown in Fig 1D. The sharp bend of a "kink" 10 in the welding wire results in interruption of the wire feed and consequently in interruption of the welding process. In some cases, welding interruptions may have serious consequences of a practical and economical nature.

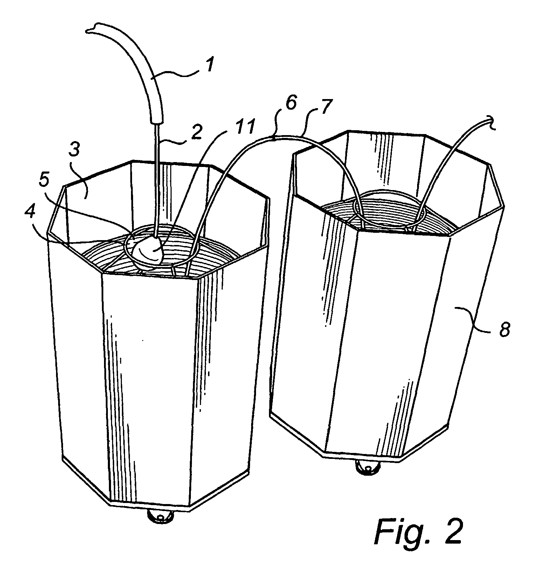

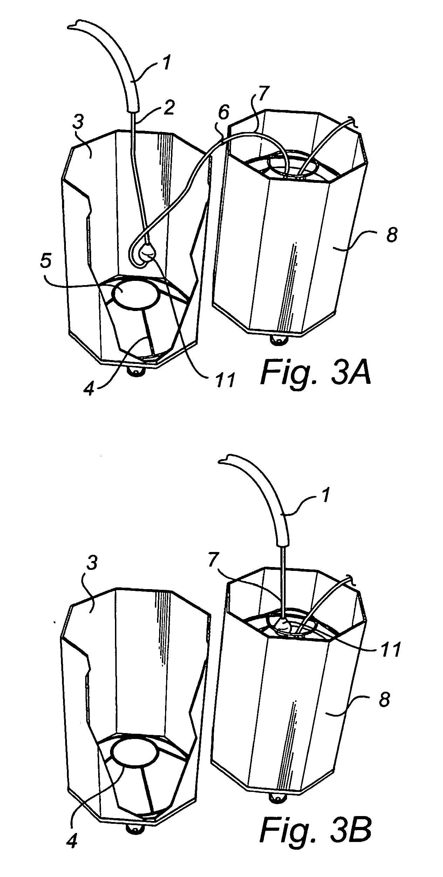

Fig 2 illustrates a device in accordance with the invention. This device differs from the prior art in that a wire-orientation runner 11, in the following referred to as a runner, is placed on the leading end part, as seen in the direction of wire feed, of the welding wire 2. As welding wire 2 is being withdrawn from the container 3, the runner 11 will advance along the welding wire 2. When the welding wire 2 inside the container 3 is used up (Fig 3A) and the wire feed continues uninterruptedly with the welding wire 7, the runner 11 accompanies the wire across the wire joint 6, and in addition it prevents undesired deformities from forming in the wire (Fig 3B).

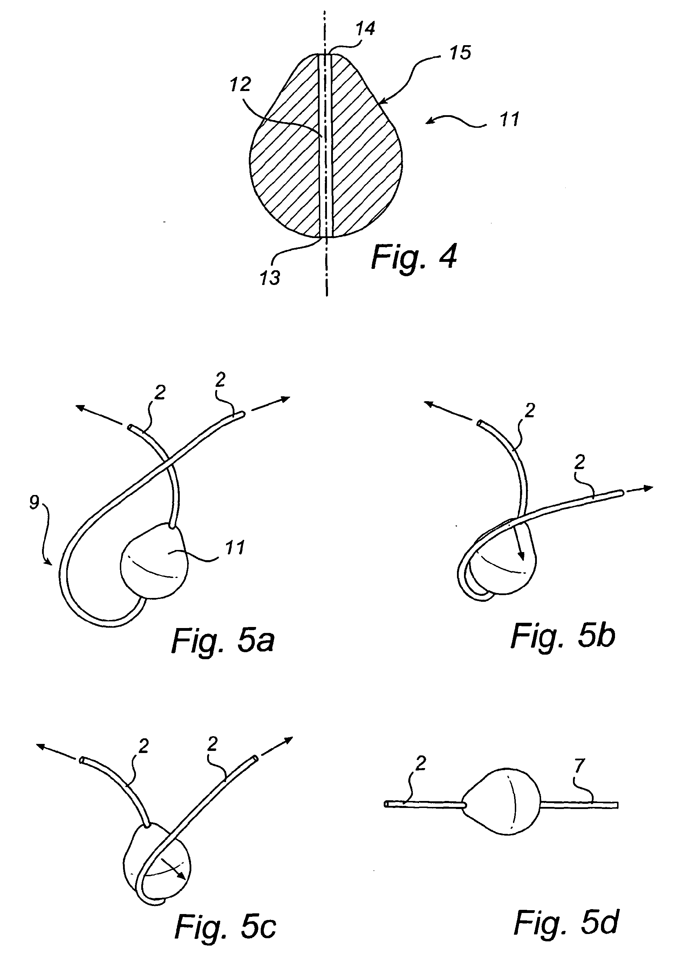

The runner 11 preferably is a solid body and it is formed with a welding-wire passage 12, as shown in Fig 4. Preferably, the runner 11 is manufactured from a material having a certain weight while at the same time being sufficiently lightweight to prevent the runner 11 from causing undesired defects on the welding wire 2, 7. In addition, the material should not have too high a braking effect but allow the runner 11 to advance comparatively easily along the welding wire 2, 7. Examples of materials of this kind are wood, metal and certain types of plastic, but the invention does not exclude the choice of other materials.

The inlet 13 to the welding-wire passage 12 should be of a nature preventing the welding wire 2, 7 from becoming stuck in the inlet 13 during the wire feed. Preferably, the inlet 13 is an essentially circular aperture. In a preferred embodiment, the welding-wire passage is a circular bore extending in the lengthwise direction of the runner 11. The welding-wire passage 12 could, however, have any desired geometrical configuration, provided it is of a nature allowing the runner 11 to move along the welding wire 2, 7 without becoming stuck or being exposed to too strong braking forces during the wire feed.

The outlet 14 from the welding-wire passage 12 preferably has a configuration identical to that of the inlet 13, but it could be given other, different geometrical shapes.

The external shape of the runner 11 could vary but it should include a slide-off surface 15 for the welding wire 2, 7. In one preferred embodiment, the forward end part of the runner 11 as seen in the direction of wire feed, is formed with an external surface that tapers gently towards the welding-wire passage, said tapering surface thus constituting said slide-off surface 15. The external shape of the runner preferably is that of a pear.

The wire feed sequence when welding wire 2 is used up and the wire feed continues uninterruptedly with welding wire 7 is illustrated in Fig 5. Fig 5A illustrates what happens when a loop 9 forms in the welding wire. Thanks to the inventive object, the loop 9 will not be tightened, however, and consequently no "kink" will form. The part of the welding wire 2 that is joined to the welding wire 7 will slide in contact with the external surface of the runner 11 (Figs 5B and 5C) and thus be moved sideways relative to the exiting wire part instead of sliding against the welding wire 2 as in the case shown in Figs 1C-1D. The wire feed thus will continue without interruptions and the welding wire 7 may be fed unimpededly through the runner 11 (Fig 5D) and further through the wire guide 1. The slide-off surface 15 on the runner 11 adjacent the outlet 14 preferably is configured in a manner allowing the welding wire to slide off without becoming stuck.

As will be appreciated numerous modifications of the embodiment of the invention described above are possible within the scope of the invention as the latter is defined in the appended claims. For example, as mentioned previously the runner may be manufactured from other materials and be given other shapes than shown. Also, the welding-wire passage could have various sizes and shapes and could have an extension relative to the runner that differs from the one shown in the drawings. The inlet and the outlet could have identical or dissimilar geometrical shapes. Although the illustrated embodiment describes changeover of the wire feed from a first to a second container, it should be appreciated that the invention also includes arrangements involving wire feed from one container only.

## Claims

1. A device in the feeding of welding wire for preventing deformities from forming in a welding wire (2) during the wire feed, wherein a first end of the welding wire (2) in one container (3) is connectable to a wire guide (1), **characterised in that** a wire-orientation runner (11) is arranged on the leading end part, as seen in the direction of wire feed, of the welding wire (2) placed inside the container (3), said runner arranged to advance, during wire feed, along the welding wire (2, 7) as the wire feed progresses.

2. A device as claimed in claim 1, **characterised in that** the trailing end of the welding wire (2) in a first container (3) holding welding wire is interconnected with the leading end of the welding wire (7) in a second container (8) holding welding wire, for continuous withdrawal of welding wire from wire-holding containers arranged one after the other.

3. A device as claimed in claim 1 or claim 2, wherein said runner (11) is formed with a welding-wire passage (12).

4. A device as claimed in any one of claims 1-3, wherein said runner (11) is a solid body.

5. A device as claimed in any one of the preceding claims, wherein the front end portion of said runner (11) as seen in the direction of wire feed is configured to form a slide-off surface (15) for said welding wire (2, 7).

6. A device as claimed in any one of the preceding claims, wherein the front end portion of said runner (11) as seen in the direction of wire feed has a shape that softly tapers towards the welding-wire passage (12), thus forming said slide-off face (15).

7. A device as claimed in any one of the preceding claims, wherein said runner (11) is essentially pear-shaped.

8. A device as claimed in any one of the preceding claims, wherein the welding-wire passage (12) extends in the longitudinal direction of the runner (11).

9. A device as claimed in any one of the preceding claims, wherein the inlet (13) to the welding-wire passage (12) is an essentially circular aperture.

10. A method for feeding welding wire, comprising the steps of:
- connecting a first end of a welding wire (2) in a first container (3) holding welding wire to a wire guide (1) and
- arranging a wire-orientation runner (11) on the leading end part, as seen in the direction of wire feed, of the welding wire (2) placed inside the first container (3).

11. A method for feeding welding wire as claimed in claim 10, wherein feeding of welding wire comprises
uninterrupted changeover of the welding-wire withdrawal from a first container holding welding wire to a second container holding welding wire, said method further comprising the steps of:
- interconnecting a second end of the welding wire (2) in the first container (3) holding welding wire and the first end of a welding wire (7) in a second container (8) holding welding wire, and
- allowing said runner (11) to automatically accompany the welding wire from the first to the second container holding welding wire, when the supply of welding wire in said first container holding welding wire runs out.

12. A method as claimed in claim 10 or claim 11, wherein said runner (11) is formed with a welding-wire passage (12).

13. A method as claimed in any one of claims 10-12, wherein said runner (11) is a solid body.

14. A method as claimed in any one of claims 10-13, wherein the front end portion of said runner (11) as seen in the direction of wire feed is configured to form a slide-off surface (15) for said welding wire (2, 7).

15. A method as claimed in any one of claims 10-14, wherein the front end portion of said runner (11) as seen in the direction of wire feed has a shape that softly tapers towards the welding-wire passage (12), thus forming said slide-off surface (15).

16. A method as claimed in any one of claims 10-15, wherein said runner (11) is essentially pear-shaped.

17. A method as claimed in any one of claims 10-16, wherein the welding-wire passage (12) extends in the longitudinal direction of the runner (11).

18. A method as claimed in any one of claims 10-17, wherein the inlet (13) to the welding-wire passage (12) is an essentially circular aperture.

## Patentansprüche

1. Vorrichtung zum Zuführen von Schweißdraht zum Verhindern des Entstehens von Verformungen in einem Schweißdraht (2) während der Drahtzuführung, wobei ein erstes Ende des Schweißdrahtes (2) in einem Behälter (3) mit einer Drahtführung (1) verbunden werden kann, **dadurch gekennzeichnet, dass** ein Drahtausrichtungsläufer (11) am Vorderendteil, in der Drahtzuführrichtung gesehen, des im Inneren des Behälters (3) befindlichen Schweißdrahtes (2) angeordnet ist, wobei der Läufer dafür konfiguriert ist, sich während der Drahtzuführung entlang des Schweißdrahtes (2, 7) in dem Maße vorwärts zu schieben, wie die Drahtzuführung voranschreitet.

2. Vorrichtung nach Anspruch 1, **dadurch gekennzeichnet, dass** das Hinterende des Schweißdrahtes (2) in einem ersten Behälter (3), der Schweißdraht enthält, mit dem Vorderende des Schweißdrahtes (7) in einem zweiten Behälter (8), der Schweißdraht enthält, verbunden ist um kontinuierlich Schweißdraht aus Draht enthaltenden Behältern, die hintereinander angeordnet sind, herauszuziehen.

3. Vorrichtung nach Anspruch 1 oder Anspruch 2, wobei der Läufer (11) mit einer Schweißdrahtdurchführung (12) ausgebildet ist.

4. Vorrichtung nach einem der Ansprüche 1-3, wobei der Läufer (11) ein massiver Körper ist.

5. Vorrichtung nach einem der vorangehenden Ansprüche, wobei der Vorderendabschnitt des Läufers (11), in der Drahtzuführrichtung gesehen, so konfiguriert ist, dass eine Abgleitfläche (15) für den Schweißdraht (2, 7) gebildet wird.

6. Vorrichtung nach einem der vorangehenden Ansprüche, wobei der Vorderendabschnitt des Läufers (11), in der Drahtzuführrichtung gesehen, eine Form hat, die sich sanft in Richtung der Schweißdrahtdurchführung (12) verjüngt, wodurch die Abgleitfläche (15) gebildet wird.

7. Vorrichtung nach einem der vorangehenden Ansprüche, wobei der Läufer (11) im Wesentlichen birnenförmig ist.

8. Vorrichtung nach einem der vorangehenden Ansprüche, wobei sich die Schweißdrahtdurchführung (12) in der Längsrichtung des Läufers (11) erstreckt.

9. Vorrichtung nach einem der vorangehenden Ansprüche, wobei der Eingang (13) zu der Schweißdrahtdurchführung (12) eine im Wesentlichen kreisförmige Öffnung ist.

10. Verfahren zum Zuführen von Schweißdraht, das folgende Schritte umfasst:
- Verbinden eines ersten Endes eines Schweißdrahtes (2) in einem ersten Behälter (3), der Schweißdraht enthält, mit einer Drahtführung (1) und
- Anordnen eines Drahtausrichtungsläufers (11) am Vorderendteil, in der Drahtzuführrichtung gesehen, des im Inneren des ersten Behälters (3) befindlichen Schweißdrahtes (2).

11. Verfahren zum Zuführen von Schweißdraht nach Anspruch 10, wobei das Zuführen von Schweißdraht Folgendes umfasst:
unterbrechungsfreies Überwechseln des Schweißdrahtabzugs aus einem ersten Behälter, der Schweißdraht enthält, zu einem zweiten Behälter, der Schweißdraht enthält, wobei das Verfahren des Weiteren folgende Schritte:
- Verbinden eines zweiten Endes des Schweißdrahtes (2) in dem ersten Behälter (3), der Schweißdraht enthält, und des ersten Endes eines Schweißdrahtes (7) in einem zweiten Behälter (8), der Schweißdraht enthält, und
- Ermöglichen, dass der Läufer (11) automatisch den Schweißdraht von dem ersten zu dem zweiten Behälter, der Schweißdraht enthält, begleitet, wenn der Vorrat an Schweißdraht in dem ersten Behälter, der Schweißdraht enthält, zur Neige geht.

12. Verfahren nach Anspruch 10 oder Anspruch 11, wobei der Läufer (11) mit einer Schweißdrahtdurchführung (12) ausgebildet ist.

13. Verfahren nach einem der Ansprüche 10-12, wobei der Läufer (11) ein massiver Körper ist.

14. Verfahren nach einem der Ansprüche 10-13, wobei der Vorderendabschnitt des Läufers (11), in der Drahtzuführrichtung gesehen, so konfiguriert ist, dass eine Abgleitfläche (15) für den Schweißdraht (2, 7) gebildet wird.

15. Verfahren nach einem der Ansprüche 10-14, wobei der Vorderendabschnitt des Läufers (11), in der Drahtzuführrichtung gesehen, eine Form hat, die sich sanft in Richtung der Schweißdrahtdurchführung (12) verjüngt, wodurch die Abgleitfläche (15) gebildet wird.

16. Verfahren nach einem der Ansprüche 10-15, wobei der Läufer (11) im Wesentlichen birnenförmig ist.

17. Verfahren nach einem der Ansprüche 10-16, wobei sich die Schweißdrahtdurchführung (12) in der Längsrichtung des Läufers (11) erstreckt.

18. Verfahren nach einem der Ansprüche 10-17, wobei der Eingang (13) zu der Schweißdrahtdurchführung (12) eine im Wesentlichen kreisförmige Öffnung ist.

## Revendications

1. Dispositif d'avance du fil de soudure pour empêcher que des déformations ne se forment dans un fil de soudure (2) pendant l'avance du fil, dans lequel une première extrémité du fil de soudure (2) dans un conteneur (3) peut être raccordée à un guide-fil (1), **caractérisé en ce que** une coulisse d'orientation de fil (11) est disposée sur la partie d'extrémité avant, vue dans la direction d'avance du fil, du fil de soudure (2) placé à l'intérieur du conteneur (3), ladite coulisse étant disposée de manière à avancer, pendant l'avance du fil, le long du fil de soudure (2,7) lorsque l'avance du fil progresse.

2. Dispositif selon la revendication 1, **caractérisé en ce que** l'extrémité arrière du fil de soudure (2) dans un premier conteneur (3) contenant du fil de soudure est interconnectée avec l'extrémité avant du fil de soudure (7) dans un second conteneur (8) contenant du fil de soudure, afin de retirer en continu le fil de soudure des conteneurs contenant le fil disposés l'un après l'autre.

3. Dispositif selon la revendication 1 ou 2, dans lequel ladite coulisse (11) est formée avec un passage de fil de soudure (12).

4. Dispositif selon une quelconque des revendications 1 à 3, dans lequel ladite coulisse (11) est un corps massif.

5. Dispositif selon une quelconque des revendications précédentes, dans lequel la portion d'extrémité avant de ladite coulisse (11), vue dans la direction d'avance du fil, est configurée afin de former une surface d'enlèvement par glissement (15) pour ledit fil de soudure (2,7).

6. Dispositif selon une quelconque des revendications précédentes, dans lequel la portion d'extrémité avant de ladite coulisse (11), vue dans la direction d'avance du fil, a une forme qui s'effile légèrement dans la direction du passage de fil de soudure (12), en formant ainsi ladite face d'enlèvement par glissement (15).

7. Dispositif selon une quelconque des revendications précédentes, dans lequel ladite coulisse (11) est essentiellement en forme de poire.

8. Dispositif selon une quelconque des revendications précédentes, dans lequel le passage du fil de soudure (12) s'étend dans la direction longitudinale de la coulisse (11).

9. Dispositif selon une quelconque des revendications précédentes, dans lequel l'entrée (13) vers le passage du fil de soudure (12) est une ouverture essentiellement circulaire.

10. Procédé d'avance du fil de soudure, comprenant les étapes consistant à :
- raccorder une première extrémité du fil de soudure (2) dans un premier conteneur (3) contenant du fil de soudure à un guide-fil (1) et
- disposer une coulisse d'orientation de fil (11) sur la partie d'extrémité avant, vue dans la direction d'avance du fil, du fil de soudure (2) placé à l'intérieur du premier conteneur (3).

11. Procédé d'avance du fil de soudure selon la revendication 10, dans lequel l'avance du fil de soudure comprend la permutation ininterrompue du retrait du fil de soudure d'un premier conteneur contenant du fil de soudure à un second conteneur contenant du fil de soudure, ledit procédé comprenant en outre les étapes consistant à :
- interconnecter une seconde extrémité du fil de soudure (2) dans le premier conteneur (3) contenant du fil de soudure et la première extrémité d'un fil de soudure (7) dans un second conteneur (8) contenant du fil de soudure, et
- permettre à ladite coulisse (11) d'accompagner automatiquement le fil de soudure du premier au second conteneur contenant du fil de soudure, quand l'alimentation du fil de soudure dans ledit premier conteneur contenant du fil de soudure s'épuise.

12. Procédé selon la revendication 10 ou la revendication 11, dans lequel ladite coulisse (11) est formée avec un passage de fil de soudure (12).

13. Procédé selon une quelconque des revendications 10 à 12, dans lequel ladite coulisse (11) est un corps massif.

14. Procédé selon une quelconque des revendications 10 à 13, dans lequel la portion d'extrémité avant de ladite coulisse (11) vue dans la direction d'avance du fil est configurée afin de former une surface d'enlèvement par glissement (15) pour ledit fil de soudure (2, 7).

15. Procédé selon une quelconque des revendications 10 à 14, dans lequel la portion d'extrémité avant de ladite coulisse (11) vue dans la direction d'avance du fil a une forme qui s'effile légèrement dans la direction du passage de fil de soudure (12), en formant ainsi la surface d'enlèvement par glissement (15).

16. Procédé selon une quelconque des revendications 10 à 15, dans lequel ladite coulisse (11) est essentiellement en forme de poire.

17. Procédé selon une quelconque des revendications 10 à 16, dans lequel le passage du fil de soudure (12) s'étend dans la direction longitudinale de la coulisse (11).

18. Procédé selon une quelconque des revendications 10 à 17, dans lequel l'entrée (13) vers le passage de fil de soudure (12) est une ouverture essentiellement circulaire.
